# EUROPÄISCHE PATENTANMELDUNG

(11) **EP 1 114 586 A1**
(43) Veröffentlichungstag der Anmeldung: **11.07.2001**
(21) Anmeldenummer: 01107336.8
(22) Anmeldetag: 23.03.1996
(51) Int. Cl.: A23C 9/20, A23C 9/127, A23L 1/305

(54) **Verfahren zur Herstellung von Diätnahrungen**

(30) Priorität: 24.03.1995 DE 19510765
(62) Teilanmeldung aus: 96908126.4
(71) Anmelder: Bühlbäcker, Alexander, 50374 Erftstadt (DE)
(72) Erfinder: Bühlbäcker, Alexander, 50374 Erftstadt (DE)
(74) Vertreter: Jönsson, Hans-Peter, Dr.

(57) **Zusammenfassung**

Die Erfindung betrifft Frühgeborenen-, Säuglings- und Diätnahrungen sowie Verfahren zu ihrer Herstellung auf der Basis von Milch, Milchbestandteilen und Milchprodukten von Säugetieren.

Sie zeichnet sich dadurch aus, dass die Produkte in wesentlichen Bestandteilen in einer Weise an die physiologischen Bedürfnisse der Zielgruppen angepasst ist, die den Standard marktüblicher Nahrungen deutlich übertrifft. In den erfindungsgemäßen Nahrungen ligt ein Teil oder das gesamte beta-Lactoglobulin des Eiweißes in der Form von Monomeren vor. Das Verhältnis von alpha-Lactalbumin zu beta-Lactoglobulin ist gegenüber Wiederkäuermilchen verbessert. Beta-Casein liegt in den Nahrungen mindestens in derselben Menge wie alpha-s-Casein vor. Die Erfindung zeichnet sich weiterhin dadurch aus, dass die Verfahren weitgehend ohne eingreifende milchtechnologische Prozesse durchführbar sind.

## Beschreibung

Die Erfindung betrifft Frühgeborenen-, Säuglings- und Diätnahrungen sowie Verfahren zu ihrer Herstellung auf der Basis von Milch, Milchbestandteilen und Milchprodukten von Säugetieren.

Der quantitativ überwiegende Teil von Nahrungen für Frühgeborene, Säuglinge und Kleinkinder wird auf der Basis von Kuhmilch hergestellt. Für Personen, die gegen Kuhmilch allergisch sind, stehen entsprechende Nahrungen auf Soja-Basis zu Verfügung, sowie sogenannte hypoallergene Nahrungen, deren Proteinanteil überwiegend durch Säurehydrolyse von Kuhmilch-Molkenprotein oder Rinderkollagen hergestellt wird. Für die Anpassung von Kuhmilch an die physiologischen Bedürfnisse von Frühgeborenen, Säuglingen und Kleinkindern sind diverse Verfahren bekannt (Janicki u. Pordab, 1975; EG Amtsblatt L 175, 1991; WO 91108675), ebenso für Soja-"Milch" (zum Beispiel EG Amtsblatt L 175,1991). Die anderen genannten Proteinquellen sind marktüblich.

Die Anpassung anderer Säugetiermilchen an die im folgenden genannten Referenzen ist nicht zum aktuellen Stand der Technik zu rechnen, weil entweder die biochemische Zusammensetzung der entsprechenden Säugetiermilch noch nicht genügend geklärt ist, oder weil aufgrund von Besonderheiten der Zusammensetzung der Milch und/oder deren Verfügbarkeit in entsprechenden Mengen eine Adaption zum Zweck der Säuglings- und Frühgeborenenernährung nicht in Frage kommt und deshalb nicht näher erforscht wurde (EG Amtsblatt L 175,1991). Das gilt im übrigen auch für die Anpassung dieser Säugetiermilchen an andere diätetische Notwendigkeiten (zum Beispiel: Leberfunktionsstörungen, Niereninsuffizienz, und so weiter).

Für Säuglinge gilt als Referenznahrung die Frauenmilch; auch hat die EU Richtlinien für die Herstellung von Säuglingsanfangs- und-Folgenahrungen erstellt (EG Amtsblatt L 175, 1991); für die Ernährung von Frühgeborenen und Kleinkindern haben verschiedene Ernährungsgesellschaften Vorschläge erarbeitet. In Europa gelten die Ausarbeitungen der ESPGAN (European Society of Pediatric Gastroenterology and Nutrition), in den USA die der AAP (Americon Academy of Pediatrics) als maßgeblich.
Mit unveränderter Kuhmilch, unveränderter Soja-"Milch" sowie den anderen genannten Proteinquellen lassen sich die vorgeschriebenen Referenzen nicht erreichen. Aus diesem Grund werden aufwendige milchtechnologische Verfahren eingesetzt, um zu Nahrungszusammensetzungen zu gelangen, die den vorgegebenen Richtlinien möglichst nahe kommen. Durch diese tief in die natürliche Milchstruktur eingreifenden Verfahren entstehen einige physiologische Probleme.

Zum Beispiel sind die Resorptionsquoten der Inhaltsstoffe bei künstlichen Nahrungsgemischen im allgemeinen deutlich geringer als bei natürlichen Nahrungskompositionen, wie unbehandelter Milch. Ein eklatantes Beispiel dafür ist die Eisenresorption bei Säuglingen. Bei reiner Frauenmilchernährung beträgt die Resorptionsquote zwischen 70 % und 90 %. Bei Formulanahrungen auf Kuhmilchbasis liegt sie zwischen 4 % und 7 %. Um eine adäquate Eisenversorgung zu gewährleisten, enthält Frauenmilch durchschnittlich etwa 50 mg Eisen pro 100 ml, während Säuglingsformeln zum Teil mit über 1000 mg Eisen pro 100 ml Nahrung substituiert werden müssen. Diese Verhältnisse gelten in analoger und abgeschwächter Form für fast alle Nährstoffe.

Ein weiteres Problem ergibt sich durch das Herausreißen von Nahrungsbestandteilen aus ihren natürlichen Zusammenhängen und dem späteren Resubstituieren. So wurden in den letzten Jahren mehrfach Fälle von hypochlorämischer Alkalose durch alimentären Chloridmangel bei Säuglingen in der Fachpresse veröffentlicht. Meistens handelt es sich um Probleme der technischen Sicherheit bei der Herstellung entsprechender Säuglingsformeln.

Natürliche Nahrungsgrundlagen, enthalten neben den bekannten und in ihrer physiologischen Bedeutung erforschten Substanzen häufig noch eine Vielzahl von Inhaltsstoffen, die überhaupt oder in ihrer Bedeutung für den Organismus nicht bekannt, aber trotzdem von essentiellem Charakter sind. In einem natürlichen Substanzgemisch sind diese Stoffe häufig enthalten, in künstlichen oder durch technologische Prozesse denaturierten Produkten müssen sie jedoch in der Regel gezielt zugesetzt werden, was aber erst geschehen kann, wenn man Kenntnis von der physiologischen Bedeutung und dem Bedarf hat. Beispiele dafür aus jüngerer Zeit aus dem Sektor der Säuglings- und Frühgeborenenernährung sind die Diskussionen um die nichtproteinogene Aminosäure Taurin und das Carnitin. Carnitin und Taurin sind zum Beispiel in Nahrungen mit der Proteinquelle Soja nicht ausreichend vorhanden. Erst durch Zeichen einer Mangelversorgung (zum Beispiel muskuläre Hypotonien bei Säuglingen unter nicht Carnitin-substituierten Säuglingsnahrungen auf Sojabasis) wurde man auf die Mängel aufmerksam. Hierhin gehört auch, dass bei der Demineralisierung der Kuhmilch alle Spurenelemente verloren gehen, während bei der Remineralisierung nur die wichtigsten Spurenelemente beziehungsweise diejenigen, die in ihrer physiologischen Bedeutung bekannt sind, wieder zugesetzt werden. Diese Tatsache stößt bei Fachleuten immer wieder auf Bedenken und Kritik.

Zunehmende Schwierigkeiten entstehen bei der Ernährung von Kindern mit Kuhmilch- oder Sojaproteinintoleranzen. Ein häufig gewählter Lösungsansatz ist die Verminderung der Antigenität des Proteins durch säurehydrolytische Spaltung. Aufgrund dieses Ansatzes werden verschiedene sogenannte hypoallergene Säuglingsformeln hergestellt. Proteinhydrolysatnahrungen haben einen bitteren milchfremden Geschmack, der zu einer ausgeprägt schlechten Akzeptanz seitens der Zielgruppe führt (EP 0 307 559 B1).

Insgesamt gesehen stellt also eine Frühgeborenen-, Säuglings- oder Kleinkindnahrung auf Kuhmilchbasis eine Nahrung dar, von der auf der einen Seite große Quantitäten gegeben werden müssen, um die physiologischen Bedürfnisse der Zielgruppe zu erfüllen, auf der anderen Seite ist aufgrund der großen technologischen Eingriffe eine Mangelernährung in bezug auf verschiedene Substanzen dennoch nicht sicher auszuschließen. Mit diesen Eigenschaften steht eine Formelnahrung in einer gewissen Weise im krassen Gegensatz zur natürlichen Nahrung Frauenmilch. Frauenmilch ernährt den Säugling nach allen bisherigen Erkenntnissen in adäquater Weise mit minimalen stofflichen Quantitäten. Sie belastet also den Säugling, der einerseits noch in der Entwicklung befindliche Verdauungsorgane besitzt, auf der anderen Seite so schnell wächst wie im späteren Leben niemals mehr, nur mit einer geringen Verdauungstätigkeit und führt ihm dennoch alle Stoffe zu, die zu einem raschen und gesunden Wachstum erforderlich sind. Außerdem enthält Frauenmilch einige Substanzen (zum Beispiel: Lysozym, Lactoferrin, sekretorisches Immunglobulin A), die gerade in der für die allergene Prägung vulnerablen Phase einen Schutz und eine Förderung der ordnungsgemäßen Entwicklung des Darmes und auch des Immunsystems darstellen. Säuglingsformeln hingegen belasten den noch schwachen Säuglingsorganismus mit einer großen Substanzmenge, bieten darüber hinaus unter Umständen die Gefahr einer Mangelernährung; Schutz und Förderung der Entwicklung des Darmsystems und des Immunsystems entfallen völlig. Aus diesem Grunde sind sich alle bedeutenden auf diesem Feld tätigen Forscher seit Jahren einig, dass es sich bei der Ernährung von Säuglingen mit Formelnahrungen um das bisher größte in-vivo-Experiment an Menschen ohne geeignete Kontrollgruppe handelt. Zwar ist auf der einen Seite das Gedeihen von gesunden Säuglingen mit Säuglingsformeln in den unmittelbar überschaubaren Zeiträumen gut. Auf der anderen Seite sind die durch diese Nahrungen entstehenden Spätschäden bisher kaum übersehbar oder durch entsprechende Studien verifizierbar.

Die Anpassung von Nahrungsmitteln an bestimmte diätetische Bedürfnisse durch lebensmitteltechnologische Prozesse und den Zusatz diverser Substanzen ist an sich seit Jahren Stand der Technik (zum Beispiel bei der Ergänzung von milchtechnologisch vorbehandelten Proteinfraktionen zu einer vollständigen Säuglingsnahrung). Um eine solche Anpassung gemäß den heutigen Standards (siehe zum Beispiel EG Amtsblatt L 175, 1991) vornehmen zu können, ist jedoch eine detaillierte Kenntnis der Zusammensetzung der gewählten Ausgangssubstanz(en) erforderlich. Diese ist zum Beispiel für Kuhmilch und Soja-"Milch' allgemein zugänglich, jedoch nicht für Equidenmilch.

Versuche zur Anpassung von Esel- und Pferdestutenmilch an die physiologischen Bedürfnisse von Säuglingen und Frühgeborenen wurden schon mehrfach durchgeführt (Klemm R.: Über Eselsmilch und Säuglingsmilchernährung, Jahrbuch für Kinderheilkunde, 43, S. 369 ff., 1896, besonders S. 384; Wiesener H.: Untersuchungen zur Verwendung von Stutenmilch in der Säuglingsernährung, Berliner Medizin, 14, S. 589, 1963; Wiesener H. : Unersuchungen zum Vitamin C-Bedarf junger Säuglinge. Medizin und Ernährung, 7, S.120, 1964; Wiesener H. et. al.: Untersuchungen zur Wertigkeit der künstlichen Säuglingsernährung, Sonderdruck: Städtische Kinderklinik Charlottenburg, Berlin, 1964; Freudenberg E.: Über Säuglingsernährung mit Stutenmilch, Annales paediatrici, 166, S.338, 1946, I; Annales paediatrici, 171, S.49, 1948, II; Die Nahrung, 1975, S. 129 bis 142; Kalliala H. et. al.: On the use of mare's milk in infant feeding, Acta Paedriatr., 40, S. 94, 1951). Allen Versuchen ist zu eigen, dass es sich um den probeweisen Einsatz von Equidenmilch zur Ernährung von Säuglingen und Frühgeborenen, teilweise unter klinischen Bedingungen, handelt, um die Eignung von Equidenmilch für solche Zwecke zu testen. Equidenmilch wurde zu diesen Zwecken nach dem damaligen jeweiligen Kenntnisstand grob an die Frauenmilch angepasst. Dazu wurde eine Anreicherung mit Zuckern und/oder Kohlenhydraten sowie mit Fetten vorgenommen. Fette enthalten bekanntlich auch fettlösliche Vitamine, womit zwangsläufig auch eine, allerdings relativ ungerichtete Vitaminsubstitution möglich ist. Das gilt auch für ein damals im Handel befindliches synthetisches, in fixer Kombination mit Vitaminen angereichertes Fettgemisch, das von Wiesener (Wesener, 1963) mit dem Ziel der Fettsubstitution (nicht der Vitaminsubstitution) Equidenmilch versuchsweise in unterschiedlichen Mengen beigegeben wurde. Eine isolierte, sich an der genauen Kenntnis der schon vorhandenen Inhaltsstoffe der Equidenmilch orientierenden Vitaminzugabe mit dem Ziel der Anpassung an Frauenmilch wurde nicht vorgenommen. Aus dieser Art und Handhabung geht hervor, dass es sich in den genannten Fällen um eine mehr experimentelle, sich vor allem an klinischen Gesichtspunkten und nicht an einer genauen Kenntnis der Inhaltsstoffe der Equidenmilch orientierenden Substitutionsweise handelt. Diese würde in wesentlichen Punkten die heute zum Teil gesetzlich geforderten Ansprüche an eine Säuglings- oder Frühgeborenennahrung nicht erfüllen.

Im US-Patent 5169 666 wird gezeigt, dass Kuhmilchprotein im wesentlichen durch physikalische Manipulationen an der Proteinstruktur in einem bestimmten Grad an Frauenmilchprotein angepasst wird. Die Druckschrift bezieht sich auf ein humanisiertes Kuhmilchprodukt, das eine Proteinzusammensetzung ähnlich der Frauenmilch hat, mit einem hohen Anteil an beta-Casein (mindestens 39% der Caseinfraktion). Ein Anteil von 39 % beta-Casein liegt innerhalb der Schwankungsbreite normaler, unveränderter Kuhmilch (26-40 % vom Gesamtcaseins). Die Druckschrift betrifft damit praktisch nur eine, in ihrem Verhältnis Casein zu Molkenprotein an die Frauenmilch angepasste Kuhmilch, die an sich schon vor 1992 zum Stand der Technik gehörte. Der Anspruch 8 der Druckschrift umfasst ein Verhältnis von alpha-Lactalbumin zu beta-Lactoglobulin im Mittel von größer als 0,8, jedoch handelt es sich bei der Ausgangssubstanz um Kuhmilch, die beta-Lactoglobulin nicht in Form von Monomeren enthält.

In dem Patent WO 91108675 wird ein Verfahren beschrieben, bei dem nach genetischer Manipulation durch den Mikroorganismus Escherichia coli alpha-Lactalbumin und beta-Casein hergestellt werden, welche die gleiche Aminosäurenzusammensetzung und -Funktion wie humanes alpha-Lactalbumin und beta-Casein haben soll. Dementsprechend wird ein Quotient von alpha-Lactalbumin zu beta-Lactoglobulin im Mittel von größer als 0,8 und von beta-Casein zu alpha-s-Casein im Mittel von größer als 1 erfüllt. Jedoch enthält die Proteinkomponente der Nahrung keine weiteren Proteine anderen Ursprungs, beispielsweise beta-Lactoglobulin oder alpha-s-Casein.

Bei dem US-Patent 4 954 361 wird ein Verfahren beschrieben, bei dem Kuhmilch durch Ultrafiltration von sämtlichen Eiweiß- und Fettbestandteilen befreit wird. Das so gewonnene Permeat wird mit nichttierischen Proteinbestandteilen (aus Kartoffel- und Soja-Isolat) sowie einem hypoallergenen Fett supplementiert und homogenisiert. Von dem so entstandenen Produkt wird behauptet, dass es den Geruch und den Geschmack einer natürlichen Säugermilch hat. Da die Proteinquellen in dem Verfahren der Druckschrift rein pflanzlicher Basis sind, enthalten sie keine Porteinbestandteile, wie alpha-Lactalbumin, beta-Lactalbumin, beta-Casein und alpha-s-Casein.

Die EP 0 443 763 A2 beschreibt ein Verfahren, bei dem Kuhmilchmolke ultrafiltriert wird, und aus dem Ultrafiltrat durch verschiedene weitere milchtechnologische Eingriffe die Non-Protein-Nitrogen-(NPN)Komponente konzentriert wird.

In einem zweiten Schritt wird das so gewonnene NPN-reiche Proteinkonzentrat in einem lonenaustauscher von größeren Anteilen des beta-Lactoglobulins befreit. In einem weiteren Präzipitationsverfahren wird der alpha-s-Caseingehalt des Kuhmilchcaseins reduziert. Mit einem solchen Verfahren lassen sich Verhältniswerte von alpha-Lactalbumin zu beta-Lactoglobulin im Mittel größer als 1 und beta-Casein zu alpha-s-Casein Verhältnisse im Mittel größer als 0,8 erreichen. Da es sich bei der Ausgangssubstanz jedoch um Kuhmilch beziehungsweise Kuhmilchbestandteile handelt, liegt das beta-Lactoglobulin nicht in Form von Monomeren vor. Das Verfahren muss weiterhin mit Prozessen durchgeführt werden, die tief in die natürliche Milchstruktur eingreifen.

Zusammenfassend kann man sagen, dass alle bisher erwähnten Probleme bei der Fertigung von Frühgeborenen- und Säuglings- und Diätnahrungen auf folgenden Umständen beruhen:
Zur Herstellung der Spezialnehrungen werden Substanzen oder Lebensmittel verwendet, die in großen Mengen und zu finanziell günstigen Konditionen auf dem Markt erhältlich sind. Diese Ausgangssubstanzen weisen jedoch in der Regel in ihrer Zusammensetzung erhebliche Abweichungen gegenüber der notwendigen biochemischen Zusammensetzungen der jeweils zu produzierenden Diätnahrung auf. Um diese Anpassung zu erreichen, müssen aufwendige lebensmitteltechnologische Prozesse angewendet werden. Des weiteren ist man darauf angewiesen, in größerem Umfang chemisch definierte, isolierte und nicht selten synthetisch hergestellte Zusatzstoffe zuzufügen. Man erhält auf diese Weise als Endprodukt ein weitgehend artifizielles Nährstoffgemisch, das rein substanziell betrachtet, den physiologischen Bedürfnissen der jeweiligen Zielgruppe (zum Beispiel Frühgeborene, Säuglinge, stoffwechselkranke Patienten) soweit angepasst ist, wie es der derzeitige technische Standard unter Berücksichtigung ökonomischer Kriterien erlaubt. Wie neuere Erkenntnisse der Resorptionsforschung zeigen, ist für die optimale physiologische Anpassung jedoch nicht nur eine Anpassung nach chemisch analytischen Kriterien von Bedeutung, sondern auch die Anordnung und Verbindung der einzelnen Substanzen untereinander (zum Beispiel Mineralien- und Spurenelementeinlagerungen in Caseinmizellen der Säugetiermilchen, also biophysikalische Phänomene). Aus der bisherigen relativ starken Fixierung auf chemisch analytische Kriterien und den großzügigen Einsatz lebensmitteltechnologischer Prozesse sind dann die erwähnten Probleme bei der Herstellung von Frühgeborenen-, Säuglings- und Diätnahrungen entstanden.

Das Problem der vorliegenden Erfindung ist es, die bisher geschilderten Probleme zu lösen.

Eine erste Ausführungsform der Erfindung besteht in Frühgeborenen-, Säuglings- und Diätnahrungen mit den Merkmalen des Anspruchs 1. Weitere Ausführungsformen sind dem Verfahrensanspruch und den jeweiligen Unteransprüchen zu entnehmen.

Die Erfindung ist dadurch ausgezeichnet, dass die Produkte in wesentlichen Bestandteilen in einer Weise an die physiologischen Bedürfnisse der Zielgruppen angepasst sind, die den Standard bisher marktüblicher Nahrungen dieser Art deutlich übertreffen. Sie zeichnet sich weiterhin dadurch aus, dass die Verfahren weitgehend ohne eingreifende milchtechnologische Prozesse durchführbar sind.

Zur Vereinfachung der Darstellung steht im folgenden der Begriff "Milch" stellvertretend für die Begriffe "Milch", "Milchbestandteile" und "Milchprodukte".

Als Equidenmilch ist im folgenden vorzugsweise, jedoch nicht ausschließlich, die Milch von Pferdestuten zu verstehen.

"Fett angereichert" im Sinne der Erfindungsdefinition, insbesondere des Disclaimers des Anspruchs 1, umfasst nicht nur die Substanzklasse "Fett" in Abgrenzung zum Beispiel zu "Protein", sondern auch Kuhmilchfett und Kuhmilchsahne mit allen natürlicherweise darin enthaltenen Substanzen sowie künstliche Fettgemische, die auch Vitamin A, Vitamin E, Vitamin B6 und polyensäurehaltige Phospholipide enthalten können.

"Kohlenhydrat angereichert" im Sinne der Erfindungsdefinition, insbesondere des Disclaimers des Anspruchs 1 umfasst ausschließlich den Zusatz von Saccharose.

Unter Diätnahrungen werden im folgenden Nahrungen verstanden, die für spezifische oder unspezifische physiologische Bedürfnisse des Menschen je nach Lebensalter, Lebensumständen und/oder Erkrankung zielgerichtet hergestellt werden. Unter diese Definition fallen demzufolge auch die Begriffe "Frühgeborenennahrung" und "Säuglingsnahrung".

Erfindungsgemäß besteht erstmals die Möglichkeit mit an sich bekannten Technologien eine exakte Anpassung von Equidenmilch an die physiologischen Erfordernisse von Diätnahrungen vorzunehmen. Diese Anpassung ist wesentlicher, jedoch bei weitem nicht einziger Bestandteil der Erfindung. Ihre Kenntnis ist wesentliche Voraussetzung für die Ausarbeitung der Ausführungsbeispiele. Zum Zwecke der Herstellung von Diätnahrungen gemäß der Lehre der vorliegenden Erfindung wird Equidenmilch häufig als eine wesentliche Ausgangssubstanz eingesetzt.

Die von Freundenberg, Kalliala und Wiesener (loc. cit.) beschriebene Art der Substitution und Adaption ist mit der erfindungsgemäßen nicht gemeint. Kein des erfindungsgemäßen Verfahrens ist demgegenüber eine zielgerichtete, differenzierte Anpassung von Equidenmilch in allen erforderlichen und/oder derzeit technisch möglichen Substanzgruppen auf der Grundlage einer exakten und detaillierten Kenntnis der Inhaltsstoffe der Equidenmilch, mit dem Ziel, zum Beispiel an die heute üblichen Standards für Säuglings- und Frühgeborenennahrung oder diese Standards übertreffende Anpassungen vorzunehmen. Die erfindungsgemäße Art der Anpassung war den Autoren der zitierten Schriften nicht möglich, da ihnen die Kenntnisse der genauen Inhaltsstoffe der Equidenmilch fehlten. Die genannten groben Anpassungen an Frauenmilch umfassen zwar den Teil des beta-Lactoglobulins, das Verhältnis von alpha-Lactalbumin zu beta-Lactoglobulin und den Casein-Anteil gemäß den unabhängigen Ansprüchen, sind jedoch nicht Teil des erfindungsgemäßen Verfahrens, sondern werden durch den Disclaimer in den unabhängigen Ansprüchen ausgeschlossen.

Auch Kumyß kann, je nach Zubereitungsart, die Merkmale der unabhängigen Ansprüche der Erfindung erfüllen. Jedoch handelt es sich bei Kumyß um ein bei den asiatischen Steppenvölkern schon seit Generationen bekanntes Getränk, welches in dem in der erfindungsgemäßen Lehre verwendeten Sinne nicht als Diätnahrungsmittel bezeichnet werden kann, weil es nicht gezielt an bestimmte physiologische Bedürfnisse angepasst ist. Deshalb fallen auch die Verfahren zur Herstellung von Kumyß und das Produkt Kumyß nicht unter die erfindungsgemäße Lehre.

Das erfindungsgemäße Verfahren beginnt bei der Auswahl der Ausgangssubstanzen, die zur Herstellung der Diätnahrungen benötigt werden. Es werden Milch, Milchbestandteile und Milchprodukte von Säugetieren jeweils so ausgewählt, dass sie in ihrer Zusammensetzung der Rezeptur der Diätnahrung schon so nahe wie möglich kommen. Zu diesem Zweck kann die Milch einzelner Säugetiere verwendet werden. Auch ist die Kombination der Milche unterschiedlicher Säugetiere denkbar. Je nach Einsatzgebiet der Diätnahrung ist auch die Kombination mit allen anderen zur Ernährung und/oder therapeutischen Behandlung des Menschen bekannten Substanzquellen denkbar. Die genannten Substanzquellen werden mit dem Ziel kombiniert, schon durch die Kombination eine möglichst große Annäherung an die physiologischen Erfordernisse der jeweils angestrebten Diätnahrung zu erzielen.

Die bisher beschriebene Adaption an spezielle physiologische Bedürfnisse durch gezielte Auswahl und Kombination der Ausgangssubstanzen wird durch verschiedene Faktoren erhöht. Es soll das Beispiel der Verwendung von Equidenmilch weiter verfolgt werden. Eine weitere Anpassung ist zum Beispiel durch die Ausnutzung rassenmäßiger Unterschiede in der Milchzusammensetzung der Equiden möglich, um je nach Bedarf zum Beispiel eine protein-, fett-, mineral- oder kohlenhydratreichere beziehungsweise -ärmere Nahrung zu erhalten. Weiterhin lässt sich durch gezielte Fütterung in gewissen Grenzen Einfluss auf die biochemische Zusammensetzung der Equidenmilch nehmen. Eine weitere Möglichkeit der Einflussnahme auf die biochemische Zusammensetzung ist die Berücksichtigung des Laktationsstadiums bei der Milchverwendung. Andere Einflussnahmen sind durch die Auswahl des Melkzeitpunktes, der Länge des Melkzyklus sowie der Melkkautelen möglich. Auf diese Weise lässt sich besonders auch der Keimgehalt minimieren. Als Beispiel einer Einflussnahme bei der Weiterverarbeitung ist zum Beispiel die gezielte Fermentation von Milchanteilen oder der gesamten Milch zu erwähnen. Eine gezielte Einflussnahme, zum Beispiel auf die negativen Auswirkungen ungezielter mikrobiologischer Zersetzung der Milch durch Lagerung ist die sofortige Verarbeitung nach der Gewinnung im Erzeugerbetrieb. Zur Weiterverarbeitung wären gegebenenfalls auch der Einsatz mechanischer oder lebensmitteltechnologischer Verfahren zu zählen. Dies jedoch nur in dem Umfang, wie es zur Erzeugung der jeweiligen Diätnahrung im Sinne der Erfindung erforderlich ist. Die bisher genannten Möglichkeiten der Einflussnahme sind nur beispielhaft. In der erfindungsgemäßen Lehre ist die Ausnutzung aller Faktoren aus Tierzucht, Tierhaltung, Milchgewinnung und Milchverarbeitung eingeschlossen, die eine gezielte Einflussnahme auf die Zusammensetzung der Milch ermöglichen. Die aufgrund erfindungsgemäßer Kenntnisse ermöglichte gezielte Einflussnahme auf die genannten Faktoren ist ebenfalls fester Bestandteil der erfindungsgemäßen Lehre. Man kann den hier beschriebenen Teil des erfindungsgemäßen Verfahrens dahingehend zusammenfassen, dass alle Faktoren bei Tierzucht, Tierhaltung, Tierfütterung, bei der Milchgewinnung und -Weiterverarbeitung, die dazu geeignet sind, Einfluss auf die Milchzusammensetzung auszuüben, in gezielter Weise eingesetzt und koordiniert werden, um die zuvor ausgewählte(n) Milch(en) in ihrer Zusammensetzung so zu beeinflussen, dass sie durch diese Faktoren möglichst nahe an die notwendige Zusammensetzung der jeweiligen Diätnahrung angepasst wird. Analoges gilt im übrigen für alle anderen Nährstoffen, die mit der/den jeweiligen Milch(en) kombiniert werden.

Nachdem durch die gezielte Auswahl und gegebenenfalls Kombination der Ausgangssubstanzen sowie durch gezielte Einflussnahme auf die Entstehung und/oder Herstellung und/oder Weiterverarbeitung der Ausgangssubstanzen eine gewisse Anpassung an die notwendige Zusammensetzung der jeweiligen Diätnahrung stattgefunden hat, erfolgt eine weitere Erhöhung der Anpassung erfindungsgemäß durch den Zusatz oder die Wegnahme von Substanzen (wozu gegebenenfalls zum Beispiel auch Wasser zu zählen ist). Die an sich bekannte Adaption von Nahrungsgemischen an die Notwendigkeiten bestimmter Diätnahrungen wird beim erfindungsgemäßen Verfahren durch weitere Prozesse ergänzt oder ersetzt und so verbessert. Es gibt zwei Heilmethoden, die sich zur Zubereitung von Heilmitteln oder der Heilung selbst bestimmter Prozesse bedienen, das ist zum einen die Homöopathie nach Hahnemann und zum zweiten die anthroposophisch erweiterte Heilkunde nach Rudolf Steiner. Diese Prozesse sind in der Lage, auch kleinste Substanzmengen, die ohne die Behandlung durch solche Prozesse im menschlichen Organismus keine nachweisbare Wirkung zeigen, im Organismus zur Wirksamkeit zu bringen. Ein wichtiges Verfahren ist das Potenzieren, eine schrittweise verdünnende Verschüttelung, bei der die zu verdünnende Substanz intensiv in das Verdünnungs- oder Umgebungsmedium eingearbeitet wird. Weiterhin sind zu nennen zum Beispiel die mechanische Dispersion von Fetten in Flüssigkeiten zum Beispiel nach der Methode von Junge, Rührverfahren, in denen besondere Bewegungsabläufe vollzogen werden (zum Beispiel lemniskatenförmige Bewegungen), weiterhin die rhythmische Exposition von Substanzen gegenüber verschiedenen Lichtquellen, um nur die wichtigsten Verfahren zu nennen. Diese Verfahren finden bisher in der Medizin bei der Heilmittelzubereitung Verwendung, in der biologischdynamischen Landwirtschaft bei der Zubereitung von Kompost, Dünge- und Pflanzenschutzmitteln. Zur Anwendung in der Adaption von Nährstoffen an die Erfordernisse von Diätnahrungen wurden die Verfahren bisher nicht eingesetzt. im erfindungsgemäßen Verfahren werden diese Verfahren so eingesetzt, dass sie zur Bearbeitung von Milch und anderen Nährstoffen geeignet werden. Durch den Einsatz dieser umgearbeiteten Verfahren wird erreicht, dass die zugesetzten Substanzen so stark in das Umgebungsmedium (hier im wesentlichen Milch) eingearbeitet werden, dass sie eine enge biophysikalische und/oder biochemische Bindung mit dem Umgebungsmedium eingehen.

Dadurch wird erreicht, dass die beigefügten Substanzen in einem viel höheren Grade vom menschlichen Organismus verwertet werden können, als das bei der bisher üblichen Ergänzung (im wesentlichen einfacher Zusatz ohne Prozesse der Einarbeitung im obigen Sinne) von Nährstoffzusämmenhängen der Fall ist. Die Folge davon ist, dass vergleichsweise sehr viel geringere Substanzmengen zugefügt werden müssen, um in einer Diätnahrung die gleichen physiologischen Wirkungen zu entfalten, als das nach den bekannten Verfahren der Fall ist.

Die vorliegende Erfindung betrifft also nicht die an sich bekannte übliche Adaption von Milch und/oder anderen Nährstoffen an diätetische Zwecke. Diese wird vielmehr, soweit erforderlich, vorausgesetzt.

Die Erfindung ist gekennzeichnet dadurch, dass die Adaption an die Erfordernisse der jeweiligen Diätnahrung schon mit der Auswahl der Ausgangssubstanzen beginnt. Auch die Kombination verschiedener Ausgangssubstanzen ist je noch Erfordernissen denkbar. Ausgangssubstanzen sind Milch, Milchbestandteile und Milchprodukte von Säugetieren, wobei vorzugsweise von der Equidenmilch ausgegangen wird. Die Kombination beliebiger Säugetiermilchen untereinander und mit allen anderen zur Ernährung und/oder therapeutischen Behandlung des Menschen bekannten Nährstoffquellen ist erfindungsgemäß möglich.

Die Erfindung ist weiterhin dadurch gekennzeichnet, dass die Adaption an die jeweiligen Erfordernisse einer Diätnahrung durch gezielte Maßnahmen der Tierzucht, Tierhaltung, Tierfütterung der Milchgewinnung und Milchverarbeitung vergrößert wird. Der Einsatz lebensmitteltechnologischer Verfahren zur Erhöhung der Anpassung ist je nach den Erfordernissen erfindungsgemäß auch möglich.

Die Erfindung ist weiterhin dadurch gekennzeichnet, dass die Adaption an die jeweiligen Erfordernisse der Diätnahrung weiter erhöht wird durch Zusatz oder Wegnahme von Substanzen durch an sich bekannte Verfahren. Diese Verfahren werden je nach den Erfordernissen jedoch ergänzt oder vollständig ersetzt durch Verfahren, mit denen die Wirksamkeit der zugesetzten Substanzen auf den menschlichen Organismus erhöht werden kann, beziehungsweise die zugefügten Substanzen wesentlich intensiver in das Umgebungsmedium (das durch die vorhergehenden Adaptionsschritte vorbereitete Substanzgefüge) eingearbeitet werden kann, oder anders ausgedrückt, dass es zu einer biophysikalischen oder biochemischen Verbindung zwischen Umgebungsmedium und zugesetzter Substanz kommen kann.

Die- Erfindung ist insgesamt dadurch gekennzeichnet, dass die zur Adaption an die erforderlichen Bedürfnisse der Diätnahrung nötigen Veränderungen der Zusammensetzung der Ausgangssubstanzen im wesentlichen oder auch vollständig durch Prozesse durchgeführt werden, die den natürlichen Nährstoffzusammenhang der Ausgangssubstanzen weitgehend oder sogar vollständig erhalten und die zugefügten Substanzen so eingliedern, dass wiederum ein vom menschlichen Organismus möglichst gut verwertbarer Stoffzusammenhang entsteht. Um das zu erreichen, werden an die Stelle stark in die natürlichen Substanzgefüge eingreifender physikalischer, chemischer, biochemischer oder gentechnischer Prozesse erfindungsgemäß in der Regel die oben bereits genauer beschriebenen Maßnahmen gesetzt. Es widerspricht jedoch nicht der Erfindung, von allen an sich bekannten lebensmitteltechnologischen oder auch gentechnischen Prozessen Gebrauch zu machen.

Die Erfindung ist insgesamt weiterhin dadurch gekennzeichnet, dass das gesamte bisher geschilderte Verfahren sich in wesentlichen Teilen auf die Adaption von Milch, Milchbestandteilen und Milchprodukten von Equiden an die unterschiedlichsten diätetischen Erfordernisse bezieht.

Die erfindungsgemäßen Diätnahrungen weichen also in wesentlichen Eigenschaften von den bisher üblichen und als Standard zu bezeichnenden Diätnahrungen ab. Diese Abweichungen haben für den Anwender folgende physiologischen Vorteile:

Die Erfindung verzichtet in der Regel weitgehend auf technologische Prozesse, die das natürliche Nährstoffgefüge der Ausgangssubstanzen zerstören. Dadurch bleiben die Nährstoffe in ihrem natürlichen Gefüge erhalten, was zur Folge hat, dass sie für den menschlichen Organismus erheblich besser verwertbar sind als in künstlichen Nährstoffzusammenhängen, wie sie bei den marktüblichen Diätnahrungen in überwiegender Zahl vorliegen. Die erfindungsgemäß zugesetzten Nährstoffe werden durch die genannten Prozesse intensiv in das Nährstoffgefüge der Ausgangssubstanzen eingearbeitet, so dass auch die zugefügten Substanzen in einem hohen Maße für den menschlichen Organismus verfügbar sind, in einem viel höheren Maße als das bei üblichen Diätnahrungen der Fall ist. Die industrielle Milchbearbeitung senkt den Gehalt an Nucleotiden beträchtlich. Bei erfindungsgemäß hergestellten Säuglings- und Frühgeborenennahrungen bleiben die Nucleotide jedoch vollständig erhalten. Nucleotide haben einen günstigen Einfluss auf das Plasmalipoproteinmuster des Säuglings, Sie finden im Organismus als Vorstufe für die Nucleinsäuresynthese Verwertung. Weiterhin führen sie zu einer Geschmacksangleichung an die Humanmilch und zu einer Verbesserung der Verdaulichkeit der Milch über eine feinflockigere Caseingerinnung im Magen. Inosinmonophosphat wird auch mit einer hervorragenden Eisenresorption in Verbindung gebracht. Die genannten Vorteile treffen alle auf erfindungsgemäß hergestellten Säuglings- und Frühgeborenennahrungen zu.

Die dadurch in der Regel durchweg hohe Bioverfügbarkeit aller Substanzen der erfindungsgemäßen Diätnahrungen können mit geringen stofflichen Quantitäten eine vollständige Versorgung des menschlichen Organismus garantieren. Dadurch werden Verdauungsorgane und Stoffwechsel des menschlichen Organismus in erheblich geringerem Maße beansprucht, als dies bei konventionellen Diätnahrungen der Fall ist. Dies ist von besonderer Bedeutung für Menschen, die nur über eine geringe Verdauung-, Stoffwechsel- oder Ausscheidungsfunktion verfügen, zum Beispiel Frühgeborene, Säuglinge, nieren- und leberkranke Menschen oder Menschen, die zum Beispiel unter Colitis ulcerosa oder Morbus Crohn leiden. Die erfindungsgemäße Ernährung kommt somit, wie der einleitenden Problemdarstellung zu entnehmen ist, zum Beispiel einer Frauenmilchernährung ein erhebliches Stück näher, als das mit den bisher marktüblichen Nahrungen der Fall ist.

Erfindungsgemäß werden in der Regel nicht einzelne Komponenten aus dem natürlichen Milchgefüge herausgerissen und nachher mit Fremdsubstanzen zu neuen Nahrungen rekombiniert. Vielmehr bleiben in der Regel auch im Endprodukt Diätnahrung sämtliche in der/den Ausgangssubstanz(en) enthaltenen Substanzen erhalten. Das heißt, zum Beispiel alle Spurenelemente, alle immunologisch wichtigen Substanzen (zum Beispiel Lactoferrin, Lysozym, sekretorisches Immunglobulin A); alle bisher nicht näher erforschten und damit in ihrer Notwendigkeit nicht bekannten Substanzen bleiben auch in der Diätnahrung erhalten. Dadurch wird die Diätnahrung für den Menschen erheblich sicherer. Das soll an einem weiteren Beispiel nochmals erläutert werden. Renner, ein bedeutender Fachmann auf dem Gebiet der Kuhmilchwissenschaft, konnte 1982 noch behaupten, dass ein Zusatz pflanzlicher Fette und Öle zur Kuhmilchpräparationen völlig ausreicht, um diese in genügendem Maße an die physiologischen Bedürfnisse von Säuglingen zu adaptieren. In den letzten Jahren hat man in der Forschung zunehmend die Bedeutung der sehr langkettigen mehrfach ungesättigten Fettsäuren für die Gehirnreifung des Frühgeborenen und des Säuglings erkannt. In Frauenmilch sind diese Fettsäuren im Vergleich mit anderen Säugetiermilchfetten in besonders hohem Maße vorhanden, nicht jedoch in pflanzlichen Fetten und Öfen. Die 1982 noch als ausreichend bezeichnete Adaption mit pflanzlichen Fetten und Ölen wird folgerichtig mittlerweile in Zweifel gezogen. Das ändert jedoch nichts mehr daran, dass Säuglinge und Frühgeborene Jahrzehnte lang mit einer für die ordnungsgemäße Gehirnentwicklung unzureichenden Nahrung ernährt worden sind. !n einem natürlicheren Nahrungszusammenhang, hier der Frauenmilch, sind diese Faktoren jedoch sozusagen "automatisch" berücksichtigt.

Erfindungsgemäß wird in der Regel durch gezielte Auswahl der Ausgangssubstanzen (zum Beispiel Equidenmilch, die schon in rohem Zustand etwa so keimarm ist wie handelsübliche pasteurisierte Kuhmilch) und gezielte Einflussnahme auf die Milchgewinnung und-weiterverarbeitung der Keimgehalt der Diätnahrung soweit reduziert, dass keine Verfahren zur Keimereduktion (zum Beispiel Pasteurisieren, Sterilisieren, gamma-Bestrahlung und so weiter) angewendet werden müssen. Dadurch können im Nährstoffgefüge sämtliche hitzelabilen und oxidationsgefährdeten Substanzen erhalten bleiben (zum Beispiel Lactoferrin, Lysozym, sekretorisches Immunglobulin A, verschiedene Vitamine und Spurenelemente). Das hat zu Folge, dass nicht nur die Ernährungsfunktionen der Diätnahrung verbessert werden, sondern auch immunprotektive Funktionen für den Magen-Darm-Trakt und das gesamte Immunsystem. Diese Eigenschaft wird bisher von praktisch keiner handelsüblichen Diätnahrung erfüllt. Sie ist aber von großer Bedeutung, zum einen für Frühgeborene und Säuglinge, bei denen der Verdauungstrakt und die Stoffwechselorgane noch in der Entwicklung befindlich sind und deshalb eines immunologischen Schutzes bedürfen, auch im Hinblick auf die Vermeidung der Entwicklung von Allergien. Weiter ist diese Eigenschaft von großer Bedeutung für Patienten mit einem defekten oder geschwächten Immunsystem (zum Beispiel erbliche oder erworbene (zum Beispiel AIDS) Immundefekte oder Zustand nach Behandlung mit Zytostatika im Rahmen einer Krebstherapie).

Auch hat die Eigenschaft der Erhaltung der hitze- und oxidationslabilen Substanzen Bedeutung für die Entwicklung einer für den menschlichen Organismus günstigen Darmflora (zum Beispiel beim Frühgeborenen und Säugling eine sogenannte Bifidusflora, beim Erwachsenen eine Reduktion der fäulnisbildenden Bakterien im Darmsystem). Wesentliche in der Milch enthaltene, eine solche Darmflora fördernde, Faktoren (zum Beispiel Lysozym, Lactoferrin, sekretorisches Immunglobulin A) sind hitzelabil. Sie werden in den bisher verfügbaren konventionellen Diätnahrungen, sofern überhaupt vorhanden, durch milchtechnologische Prozesse oder Hitzebehandlung zerstört.

Die erfindungsgemäß hergestellten Diätnahrungen haben gegenüber konventionellen Diätnahrungen eine erheblich verbesserte Proteinstruktur. Dadurch, dass zum Beispiel ein Teil oder das gesamte beta-Lactoglobulin des Eiweißes in der Form von Monomeren vorliegt, wird die Antigenität der Nahrungen gegenüber Nahrungen, deren Proteinkomposition ausschließlich dimeres beta-Lactoglobulin enthält (zum Beispiel Kuhmilch und daraus hergestellte Proteinisolate), herabgesetzt. Das gegenüber Wiederkäuermilchen verbesserte Verhältnis von alpha-Lactalbumin zu beta-Lactoglobulin verbessert die Verdaulichkeit und Resorbierbarkeit des Gesamt-Molkenproteins. Der hohe Anteil an beta-Casein verbessert die Verdaubarkeit des Gesamtcaseins und die Resorbierbarkeit der enthaltenen Mineralien und Spurenelemente. Für den Einsatz von Equidenmilch im erfindungsgemäßen Verfahren ist noch die größere strukturelle Ähnlichkeit des alpha-Lactalbumins und sowohl des alpha-s-Caseins wie auch des beta-Caseins mit den entsprechenden Proteinkomponenten der Frauenmilch hervorzuheben. Insgesamt kann durch das erfindungsgemäße Verfahren eine bisher nicht erreichte Angleichung an die Proteinstrukturen in Nicht-Wiederkäuer-Milchen (zum Beispiel Frauenmilch) vorgenommen werden. Die beschriebenen Veränderungen ermöglichen für den Menschen eine erhebliche Verbesserung der Verdaubarkeit und Resorbierbarkeit des Gesamtproteins, was zum Beispiel eine effiziente Proteinversorgung mit geringeren Proteinmengen realisierbar macht.

In den letzten Jahren hat die Forschung die physiologische Bedeutung der langkettigen, mehrfach ungesättigten Fettsäuren für die ordnungsgemäße Gehirnentwicklung des Säuglings und vor allem des Frühgeborenen erkannt (siehe auch weiter vor). Hier spielen vor allem Linolsäure, Linolensäure und Arachidonsäure eine Rolle. Linol- und Linolensäure ist beim Vergleich der Säugetiermilchen außer in Frauenmilch in größeren Mengen bei den landwirtschaftlichen Nutztieren nur in der Equidenmilch enthalten, Arachidonsäure nur in Frauenmilch und der Milch eines australischen Kleinsäugetieres. In Equidenmilch wird sie nicht regelmäßig nachgewiesen. Durch das erfindungsgemäße Verfahren lässt sich jedoch der Arachidonsäuregehalt der Equidenmilch deutlich steigern. Damit ist insgesamt ein erheblicher physiologischer Vorteil von erfindungsgemäß hergestellten Säuglings- und Frühgeborenennahrungen gegenüber konventionellen Nahrungen dieser Art verbunden. Dies gilt insbesondere, weil die Herstellung arachidonsäurehaltiger Fettgemische für Säuglings- und Frühgeborenennahrungen bisher nur in aufwendigen und kostspieligen Verfahren realisierbar ist.

Bei der Anpassung von Equidenmilch an die Erfordernisse einer Säuglings- und Frühgeborenennahrung gemäß Verfahren können erstmals nahezu sämtliche Standards und Empfehlungen für Säuglings- und Frühgeborenennahrungen mit einem Produkt erfüllt werden, dessen Nährstoffe sich weitgehend in ihrem natürlichen Zusammenhang befinden und das ohne tief in die Milchstruktur eingreifende Prozesse hergestellt ist. Die Folge ist, dass das Produkt in fast allen wesentlichen Eigenschaften den derzeit auf den Markt befindlichen Produkten überlegen ist. Die Überlegenheit lässt sich im wesentlichen aus den oben geschilderten Eigenschaften ableiten. Den bisher bekannten, versuchsweisen Adaptionen von Stutenmilch an die Erfordernisse von Säuglings- und Frühgeborenennahrungen ist das Produkt durch den erheblich höheren Adaptionsgrad ebenfalls deutlich voraus.
Equidenmilch enthält üblicherweise
Kalium im Mittel in einem Gehalt von 58 mg/100 ml,
Magnesium im Mittel in einem Gehalt von 7,6 mg/100 ml,
Natrium im Mittel in einem Gehalt von 14 mg/100 ml,
Chlorid im Mittel in einem Gehalt von 32 mg/100 ml,
Lactose im Mittel in einem Gehalt von 6,1 g/100 ml,
Oligosaccharide im Mittel in einem Gehalt von 5 mg/100 ml,
N-Acetylneuraminsäure im Mittel in einem Gehalt von 5,6 mg/100 ml,
Leucin im Mittel in einem Gehalt von 180 mg/100 ml,
Methionin im Mittel in einem Gehalt von 43 mg/100 ml,
Threonin im Mittel in einem Gehalt von 85 mg1100 ml,
Tryptophan im Mittel in einem Gehalt von 20 mg/100 ml,
Valin im Mittel in einem Gehalt von 110 mg/100 ml,
Asparaginsäure im Mittel in einem Gehalt von 178 mg/100 ml,
Cystin im Mittel in einem Gehalt von 23 mg1100 m1,
Glycin im Mittel in einem Gehalt von 35 mg/1 00 ml,
Prolin im Mittel einem Gehalt von 155 mg/100 ml,
Leucin im Mittel in einem Gehalt von 180 mg/100 ml,
Lysin im Mittel in einem Gehalt von 161 mg/100 ml,
Taurin im Mittel in einem Gehalt von 2,4 mg/100 ml,
Caprinsäure im Mittel in einem Gehalt von 56 mg/100 ml,
Laurinsäure im Mittel in einem Gehalt von 74 mg/100 ml,
Myristinsäure im Mittel in einem Gehalt von 78 mg/100 ml,
Palmitinsäure im Mittel in einem Gehalt von 258 mg/100 ml,
Stearinsäure im Mittel in einem Gehalt von 15 mg/100 ml,
Myristoleinsäure im Mittel in einem Gehalt von 12 mg/100 ml,
Palmitoleinsäure im Mittel in einem Gehalt von 90 mg/100 ml,
Ölsäure im Mittel in einem Gehalt von 249 mg/100 ml,
Linolsäure im Mittel in einem Gehalt von 143 mg/1 00 ml,
Linolensäure im Mittel in einem Gehalt von 147 mg/100 ml,
Arachidonsäure im Mittel in einem Gehalt von 5 mg/100 ml,
Gesamt-Carnitin im Mittel in einem Gehalt von 0,5 mg1100 ml,
Lezithin im Mittel in einem Gehalt von 22 mg/100 ml,
Vitamin B₁ (Thiamin) im Mittel in einem Gehalt von 29 µg/100 ml,
Vitamin B₂ (Riboflavin) im Mittel in einem Gehalt von 33 µg/100 ml,
Vitamin B₃ (Niacin) im Mittel in einem Gehalt von 85 µg/100 ml,
Vitamin B₆ im Mittel in einem Gehalt von 25 µg/100 ml,
Vitamin B₁₂ im Mittel in einem Gehalt von 270 ng/100 ml,
Vitamin C im Mittel in einem Gehalt von 7 mg/100 ml,
Folsäure im Mittel in einem Gehalt von 5 µg/100 ml,
Pantothensäure im Mittel in einem Gehalt von 250 µg/100 ml,
Biotin im Mittel in einem Gehalt von 1,4 µg/100 ml,
Cholin im Mittel in einem Gehalt von 3 mg/100 ml,
Vitamin-D-Sulfat im Mittel in einem Gehalt von 0,2 µg/100 ml,
Inosit im Mittel in einem Gehalt von 20 mg/100 ml,
Vitamin A im Mittel in einem Gehalt von 50 µg/100 ml,
Carotinoide im Mittel in einem Gehalt von 30 µg/100 ml
Vitamin D im Mittel in einem Gehalt von 0,6 µg/100 ml,
Vitamin E im Mittel in einem Gehalt von 0,07 mg/100 ml,
Vitamin K im Mittel in einem Gehalt von 1,0 µg/100 ml,
Eisen im Mittel in einem Gehalt von 70 µg/100 ml,
Kupfer im Mittel in einem Gehalt von 35 µg/100 ml,
Zink im Mittel in einem Gehalt von 180 µg/100 ml,
Chrom im Mittel in einem Gehalt von 0,5 µg/100 ml,
Kobalt im Mittel in einem Gehalt von 10 µg/100 ml,
Mangan im Mittel in einem Gehalt von 3,4 µg/100 ml,
Molybdän im Mittel in einem Gehalt von 0,5 µg/100 ml,
Selen im Mittel in einem Gehalt von 0,5 µg/100 ml,
Jodid im Mittel in einem Gehalt von 2,0 µg/100 ml,
Brom im Mittel in einem Gehalt von 90 µg/100 ml,
Fluor im Mittel in einem Gehalt von 20 µg/100 ml,
Cytidinmonophosphat im Mittel in einem Gehalt von 1000 µg/100 ml,
Inosinmonophosphat im Mittel in einem Gehalt von 10 µg/100 ml,
Cytidin im Mittel in einem Gehalt von 120 µg/100 ml,
Inosin im Mittel in einem Gehalt von 12 µg/100 ml und/oder
Acetylcholin im Mittel in einem Gehalt von 100 µg/100 ml.

Das erfindungsgemäße Verfahren kann auf unterschiedliche Darreichungsformen angewendet werden:
Der Vertrieb als nicht konserviertes Frischprodukt ist aufgrund der natürlicherweise begrenzten Haltbarkeit in der Regel auf das unmittelbare Umfeld des Erzeugerbetriebes beschränkt.
Eine schonende Methode der Haltbarmachung ist zum Beispiel das Schockgefrieren des frischen Produktes bei circa -60 °C zum Beispiel nach Konfektionierung in 250 ml Beuteln. Das Produkt kann in dieser Form zum Beispiel in Spezialbehältern im Eilpaketversand vertrieben werden.

Eine weitere Möglichkeit ist die Pulverisierung des Endproduktes mit Rehydratisierung vorzugsweise mit mineralarmem Wasser bei Gebrauch. Entsprechend der Oxidations- und Hitzeempfindlichkeit des Produktes würde sich vorzugsweise die Gefriertrocknung anbieten.

Alternativ zu diesen Darreichungsformen ist zur Herstellung einiger Diätnahrungen gemäß Verfahren auch die Herstellung eines Zusatzes möglich, der nach Zugabe zu der jeweils entsprechenden Milch die entsprechende Diätnahrung entstehen. lässt. Diese Form kann unabhängig von einem Säugetiermilch und deren Produkte erzeugenden Betrieb hergestellt und vertrieben werden. Der Endverbraucher wiederum hat den Vorteil, gegebenenfalls auf frische Milch direkt vom Erzeuger zurückgreifen zu können. Auch wäre die Haltbarkeit solcher Zusätze in der Regel höher als bei Fertigprodukten.

Grundsätzlich widersprich es nicht der Erfindung, die gemäß Verfahren hergestellten Produkte in einer beliebigen Darreichungsform anzubieten.

### Ausführungsbeispiele:

### Erläuterungen:

Kumyß ist ein Getränk, welches ursprünglich aus frischer Stutenmilch, heute zum Teil auch aus Kuhmilch durch eine kombinierte alkoholische und milchsaure Gärung hergestellt wird. Man unterscheidet in der Regel schwachen (Säuregrad 24-40 SH°, 0,7-1,0 Vol.-% Alkohol), mittelstarken (Säuregrad 32-46 SH°, 1,0-1,75 Vol.-% Alkohol) und starken (Säuregrad 40-56 SH°, 1,75->2,5 Vol.-% Alkohol) Kumyß.

Osmosewasser ist Wasser, das durch den Prozess der Gegenstromosmose hergestellt wird. Im Prinzip wird hierbei Leitungswasser nach Reinigung durch ein Aktivkohle-Filter unter Druck durch eine Dünnfilmmembran gedrückt, welche durch Laserstrahlen zuvor so perforiert wurde, dass praktisch nur Wassermoleküle permeieren können. Das Verfahren kann auch als eine Art Ultrafiltration von Leitungswasser bezeichnet werden. Nach der Filtration wird eine erneute Reinigung durch Aktivkohle-Filter vorgenommen. Entsprechende Fertiggeräte, die das Osmosewasser liefern, sind im Handel erhältlich. Das damit hergestellte Wasser zeichnet sich dadurch aus, dass es zu 95% und mehr von allen enthaltenen Mineralien, Spurenelementen, Giftstoffen und so weiter gereinigt ist, es sich also nahezu um reines Wasser handelt.

Osmosewasser wird in den jeweiligen Beispielen benötigt, um den Proteingehalt der Nahrung zu verringern.

Die Beispiele enthalten alle wesentlichen Prozessschritte des erfindungsgemäßen Verfahrens. Aus der erfindungsgemäßen Lehre lassen sich jedoch auch wesentlich komplexere Produktionsverfahren ableiten, wie sie zur Herstellung höher adaptierter Diätnahrungen gemäß Verfahren auch notwendig sind. Dementsprechend ist die Erfindung nicht auf die Ausführungsbeispiele beschränkt.

### Beispiel 1:

Herstellung einer tiefgefrorenen Säuglingsnahrung (Casein: Molkenprotein ca. 50:50) mit ca. 1.35% Rohproteinanteil
Ansatz 100 kg
45 I frisch gemolkene Stutenmilch (Herdensammelmilch) der "Friesen-Rasse; 48,5 I Osmosewasser, 2 kg Maltodextrin; 2 kg Lactose; 2,5 kg gereinigtes Sonnenblumenöl; 20 g NaCl; 30 g KCI; 10 g Taurin; 2 g Nucleotide (AMP, CMP, GMP, UMP zu gleichen Anteilen); 80000 I.E. Retinylpalmitat; 20000 I.E. Ergocalciferol; 500 mg alpha-Tocopherolacetat; 50 mg Thiamin-HCI; 65 mg Riboflavin; 50 mg Pyridoxin-HCI; 500 mg Nicotinamid; 1 g L-Ascorbinsäure; 200 mg D-Panthenol; 30 mg Folsäure; 800 mg Eisenlactat; 400 mg ZnCl; 60 mg Cu-Citrat; 20 mg Na-Jodid;
45 I Stutenmilch wurden zusammen mit den 2,5 kg gereinigtem Sonnenblumenöl und den fettlöslichen Vitaminen (Retinylpalmitat, Ergocalciferol, alpha-Tocopherol) in einen Bottich gegeben, in den ein Spezialrührwerk eintauchte. Das Rührwerk besaß einen T-förmigen Quirl (Länge 3 cm, in einem Gehäuse, das an der Seite und oben mehrere kreisförmige Öffnungen (5 mm Durchmesser) besaß. Mit diesem Rührwerk wurde das Gemisch etwa 15 Minuten bei etwa 200 Upm gerührt, was eine vollständige Dispersion des Fettes und der fettlöslichen Vitamine in der Milch bewirkte.

Parallel dazu wurden die übrigen Zusätze in einem weiteren größeren Becken zu den 48,5 I Osmosewasser gegeben. in dieses Becken tauchte ein Rührwerk ein, weiches lemniskatenförmige Rührbewegungen durchführte (12/ Minute), ebenfalls 15 Minuten.

Dann wurde das vorbehandelte Stutenmilch-Fett-Vitamin-Gemisch in den großen Bottich gegeben, der die restlichen Substanzen enthielt und weitere 15 Minuten gerührt.

Das so gefertigte Produkt wurde sofort in 250 ml Beutel abgepackt, verschweißt und bei -60 °C schockgefroren.

Zum Verbrauch musste die Milch aufgetaut und leicht erwärmt werden.

| Einige Inhaltsstoffe, Mittelwerte | |
|---|---|
| | Einheit: |
| Lactose | g/100 ml 5.0 |
| Maltodextrin | g/100 ml 2.0 |
| Gesamtfett | g/100 ml 3.2 |
| Protein | g/100 ml 1.35 |
| Monomeres β-Lactoglobulin | % v. ges. Lact.glob. 100 |
| beta-Casein/alpha-s-Casein | ca. 4,2 |
| Orotsäure | µg/ 100 ml 90 |
| Niacin | µg/ 100 ml 540 |
| Vitamin E/ Linolsäureäquiv. | mg-alpha-TE/g ca. 0,9 |
| Vitamin B,I Rohprotein | µg/ g 45 |
| Natrium | mg/ 100 ml 20 |
| Kalium | mg/ 100 ml 30 |
| Calcium | mg/ 100 ml 50 |
| Magnesium | mg/ 100 ml 4 |
| Phosphor | mg/ 100 ml 28 |
| Chlorid | mg/ 100 ml 28 |

### Beispiel 2:

Herstellung einer tiefgefrorenen Säuglingsnahrung (Casein: Molkenprotein ca. 50:50) mit ca. 1.35% Rohproteinanteil mit einer gegenüber der Diätnahrung in Beispiel 1 erhöhten Bioverfügbarkeit aller zugesetzten Mineralien, wasserlöslichen Vitamine und Spurenelemente.
Verfahren wie in Beispiel 1, mit folgenden Abweichungen:
Sämtliche zugesetzten Mineralien, Spurenelemente und wasserlöslichen Vitamine wurden einzeln in jeweils 100 ml Osmosewasser gelöst. Diese Lösungen wurden wiederum einzeln in Zylinder gefüllt (300 ml Fassungsvermögen). Die Zylinder wurden verschlossen und in die entsprechenden Halterungen eines Schlagschüttelwerkes eingesetzt, welches alle Zylinder gemeinsam synchron schütteln konnte. Der charakteristische Schüttelmodus des Schlagschüttelwerkes war, dass der Schlagarm, an weichem die Zylinder befestigt waren, mit einer Frequenz von 12 Schlägen pro Minute gegen einen festen Widerstand schlug. Das Schlagwerk führte 36 Schläge aus. Dann wurde jedem Zvlinder 50 ml im Rührwerk behandeltes Stutenmilch-Fett-Vitamin-Gemisch nach Beispiel 1 zugegeben. Nun wurde erneut 3 Minuten geschüttelt, nochmals 50 ml des genannten Gemisches beigegeben und nochmals 3 Minuten geschüttelt. Dann wurden sämtliche Zylinder in den in Beispiel 1 genannten großen Bottich ausgeschüttet, ebenso wie das verbleibende Stutenmilch-Fett-Vitamin-Gemisch aus dem kleinen Bottich in Beispiel 1. Dann wurde wie in Beispiel 1, jedoch 30 Minuten lang mit dem Rührwerk gerührt, welches lemniskatenförmige Rührbewegungen durchführte.

Der übrige Herstellungsprozess und die chemische Analyse entsprach dem Beispiel 1.

### Beispiel 3:

Herstellung einer tiefgefrorenen Säuglingsnahrung (Casein: Molkenprotein ca. 50:50) mit ca. 1.35% Rohproteinanteil mit einer gegenüber der Diätnahrung in Beispiel 1 erhöhten Bioverfügbarkeit aller zugesetzten Mineralien, wasserlöslichen Vitamine und Spurenelemente, mit einem an Frauenmilchverhältnisse angeglichenen Arachidonsäuregehalt (essentielle, mehrfach ungesättigte, langkettige Fettsäure):
Verfahren wie in Beispiel 2 mit folgender Abweichung:
Verwendung von Stutenmilch der Haflinger-Rasse, Herdensammelmilch, wobei die Tiere zum Zeitpunkt der Milchgewinnung und mindestens 2 Wochen zuvor zusätzlich zum normalen Futter mit einer in Gelatine gekapselten Hühnereizubereitung gefüttert wurden.

| Einige Inhaltsstoffe, Mittelwerte | |
|---|---|
| | Einheit; |
| Arachidonsäure | mg/100 ml mindestens 16 |
| sonstige Inhaltsstoffe wie in Beispiel 1. | |

### Beispiel 4:

Herstellung einer gefriergetrockneten Frühgeborenennahrung (Casein: Molkenprotein ca. 45:55) mit ca. 1,9% Rohproteingehalt und einem gegenüber konventionellen Frühgeborenennahrungen mit Fettzusatz erhöhten Bioverfügbarkeit der Fettfraktion und der fettlöslichen Vitamine.
Ansatz: 100 kg
45 l Milch von Shetland-Ponys (Herdensammelmilch); 45 I Stuten-Milch der Steppen-Rassen (Ortov, Kirgisen) (Herdensammelmilch); 7 l Osmosewasser; 1.5 kg Lactose; 1,3 kg gereinigtes Sonnenblumenöl; 1,0 kg gereinigtes Kokosfett; 20 g NaCl; 4 g Taurin; 2 g Nucleotide (AMP, CMP, GMP, UMP zu gleichen Anteilen); 500 mg L-Carnitin-HCI; 80000 I.E. Retinylpalmitat; 20000 I.E. Ergocalciferol; 500 mg alpha-Tocopherolacetat; 5 mg Phytomenadion; 50 mg Thiamin-HCI; 65 mg Riboflavin; 70 mg Pyridoxin-HCI; 400 mg Nicotinamid; 200 mg D-Panthenol; 100 mg Folsäure; 800 mg Eisenlactat; 400 mg ZnCl; 60 mg Cu-Citrat; 20 mg Na-Jodid;

Das Sonnenblumenöl wunde gemeinsam mit dem Kokosfett in einem Bottich gerade so erwärmt, dass das Kokosfett flüssig wurde. Dann wurden die fettlöslichen Vitamine hinzugegeben. Das Gemisch wurde mit dem in Beispiel 1 beschriebenen Dispersionsrührwerk 15 Minuten homogenisiert.

Sämtliche anderen Nahrungsbestandteile wurden im großen Bottich wie in Beispiel 1 mit dem lemniskatenförmigen Rührwerk 30 Minuten gerührt.

Dieses Gemisch wurde nun in einen anderen Bottich gegossen, an welchem eine Pumpe angeschlossen war, welche die Flüssigkeit aus dem Bottich an seinem tiefsten Punkt absaugen konnte. Die abgesaugte Flüssigkeit wurde durch ein Gerät, welches seine Öffnung über dem Bottich hatte, wieder in die Wanne geleitet. Das besagte Gerät konnte nach dem Prinzip einer Wasserstrahlpumpe aus einem oberhalb des Gerätes liegenden Trichter, der mit einer düsenförmigen Öffnung in das Gerät hineinragt, Flüssigkeit aus diesem Trichter ansaugen und die eingesaugte Flüssigkeit so in der durchgeleiteten Flüssigkeit sehr fein verteilen. Die gesamte Anlage war gekapselt, um unter weitgehendem Luftabschluss arbeiten zu können. In den beschriebenen Trichter wurde nun so lange das vorbereitete Fett-Vitamin-Gemisch gegossen, bis das gesamte Gemisch in der im Zirkulationskreislauf durchgepumpten Flüssigkeit verteilt war

Das entstandene Produkt wurde unmittelbar daran anschließend gefriergetrocknet und in Gläsern zu je 120 g gefriergetrockneten Pulvers konfektioniert.

Die trinkfertige Milch wurde durch Auflösen von 120 g Pulver in 900 ml Wasser bei leichter Erwärmung zubereitet.

| Einige Inhaltsstoffe, Mittelwert | |
|---|---|
| | Einheit: |
| Lactose | g/ 100 ml 7,4 |
| Maltodextrin | g/ 100 ml 0 |
| Gesamtfett | g/ 100 ml 3,8 |
| Protein | g/ 100 ml 1,9 |
| Monomeres beta-Lactoglobulin | % v. ges. Lact.glob. 100 |
| beta-Casein/alpha-s-Casein | ca. 4,0 |
| Orotsäure | mg/ 100 ml 0,2 |
| Niacin | µg/ 100 ml 490 |
| Vitamin EI Linolsäureäquiv. | mg-alpha-TE/g ca. 0,9 |
| Vitamin B6I Rohprotein | µg/ g 50 |
| Natrium | mg/ 100 ml 25 |
| Kalium | mg/ 100 ml 58 |
| Calcium | mg/ 100 ml 95 |
| Magnesium | mg/ 100 ml 7,5 |
| Phosphor | mg/ 100 ml 50 |
| Chlorid | mg/ 100 ml 45 |

### Beispiel 5:

Herstellung einer Diätnahrung für hypoacide Magenerkrankungen oder bei Zustand nach Magenteil- oder Vollresektionen mit ca. 1,8 % Proteingehalt.
Ansatz: 100 kg
60 I starker Kumyß aus der Milch der Orlov-Rasse; 10 I Kamelmilch (Herdensammelmilch); 25,8 I Osmosewasser; 2 kg Lactose; 1 kg Maltodextrin; 100000 I.E. Retinylpalmitat; 20000 I.E. Ergocalciferol; 500 mg alpha-Tocopherolacetat; 50 mg Thiamin-HCI; 65 mg Riboflavin; 60 mg Pyridoxin-HCI; 500 mg Nicotinamid; 200 mg D-Panthenol; 200 mg ZnCl;

Alle Substanzen mit Ausnahme der im nächsten Abschnitt genannten wurden in 250 ml Kamelmilch gelöst und in einem Schüttelwerk gemäß Beispiel 2 etwa 10 Minuten verschüttelt.

Kumyß, die restliche Kamelmilch, Lactose, Maltodextrin und das Osmosewasser wurden mit einem Rührwerk, das lemniskatenförmige Rührbewegungen durchführte, in einem großen Bottich 15 Minuten verrührt. Anschließend wurden die in Kamelmilch gelösten und verschüttelten Substanzen in den Bottich gegeben und nochmals 15 Minuten verrührt.

Danach wurde das Produkt in 200 ml Klarglasflaschen abgefüllt und bei 4 °C 2 Wochen lang bei rhythmischer mäßiger Lichtexposition unter Tageslichtlampen (zum Beispiel Leuchtstoffröhren der Firma truelight) (jeweils 2 Stunden Licht und 10 Stunden Dunkelheit) gelagert.

Vor dem Verzehr wunde die Nahrung auf Zimmertemperatur erwärmt und ca. 1-1,5 Stunden vor den Mahlzeiten zu je 100 ml schluckweise getrunken.

| Einige Inhaltsstoffe, Mittelwert | |
|---|---|
| | Einheit: |
| Lactose | g/ 100 ml 3,6 |
| Maltodextrin | g/ 100 ml 1,0 |
| Gesamtfett | g/ 100 ml ca. 1,3 |
| Protein | g/ 100 ml 1,8 |
| Monomeres beta-Lactoglobulin | % v. ges. Lact.glob.ca. 70% |
| beta-Casein/alpha-s-Casein | ca. 2,5 |
| Orotsäure | mg/ 100 ml 0,5 |
| Niacin | µg/ 100 ml 300 |
| Vitamin E/ Linolsäure äquiv. | mg-alpha-TE/g ca. 0,9 |
| Vitamin B6/ Rohprotein | µg/ g 47 |
| Natrium | mg/ 100 ml 11 |
| Kalium | mg/ 100 ml 44 |
| Calcium | mg/ 100 ml 65 |
| Magnesium | mg/ 100 ml 6,0 |
| Phosphor | mg/ 100 ml 18 |
| Chlorid | mg/ 100 ml 30 |

Frühgeborenen-, Säuglings- und Diätnahrungen aus Milch, Milchbestandteilen und Milchprodukten von Säugetieren, dadurch gekennzeichnet, dass wenigstens ein Teil des in den Nahrungen enthaltenen beta-Lactoglobulins in Form von Monomeren vorliegt, das Verhältnis von alpha-Lactalbumin zu beta-Lactoglobulin im Molkenproteinanteil der Nahrangen im Mittel größer als 0,8 ist und im Casein-Anteil der Nahrungen das Verhältnis von beta-Casein zu alpha-s-Casein im Mittel größer als 1,0 ist, ausgenommen Kumyß und Frühgeborenen-, Säuglings- und Diätnahrungen, die aus unveränderter, nur fettangereicherter und/oder kohlenhydratangereicherter Säugetiermilch bestehen.

Frühgeborenen-, Säuglings- und Diätnahrungen, dadurch gekennzeichnet,
dass das Endprodukt
Kalium im Mittel weniger als 48 mg oder mehr als 68 mg/100 ml,
Magnesium im Mittel weniger als 4,6 oder mehr als 10,6 mg/100 ml,
Natrium im Mittel weniger als 9 oder mehr als 19 mg/100 ml,
Chlorid im Mittel weniger als 26 oder mehr als 38 mg/100 ml,
Lactose im Mittel weniger als 5,3 oder mehr als 6,9 g/100 ml,
Maltodextrine im Mittel mehr als 10 mg/100 ml,
Oligosaccharide im Mittel weniger als 50 oder mehr als 150 mg/100 ml,
N-Acetylneuräminsäure im Mittel weniger als 5,1 oder mehr als 6,1 mg/100 ml,
Leucin im Mittel weniger als 160 oder mehr als 200 mg/100 ml,
Methionin im Mittel weniger als 23 oder mehr als 63 mg/1 00 ml,
Threonin im Mittel weniger als 60 oder mehr als 95 mg/100 ml,
Tryptophan im Mittel weniger als 10 oder mehr als 30 mg/1 00 ml,
Valin im Mittel weniger als 80 oder mehr als 140 mg/100 ml,
Asparaginsäure im Mittel weniger als 168 oder mehr als 188 mg/100 ml,
Cystin im Mittel weniger als 18 oder mehr als 28 mg/100 ml,
Glycin im Mittel weniger als 30 oder mehr als 40 mg/1 00 ml,
Prolin im Mittel weniger als 150 oder mehr als 160 mg/100 ml,
Lysin im Mittel weniger als 131 oder mehr als 191 mg/100 ml,
Taurin im Mittel weniger als 0,9 oder mehr als 2,9 mg/100 ml,
Caprinsäure im Mittel weniger als 31 oder mehr als 81 mg/100 ml,
Laurinsäure im Mittel weniger als 34 oder mehr als 114 mg/100 ml,
Myristinsäure im Mittel weniger als 58 oder mehr als 98 mg/100 ml,
Palmitinsäure im Mittel weniger als 208 oder mehr als 308 mg/100 ml,
Stearinsäure im Mittel weniger als 8 oder mehr als 22 mg/100 ml,
Myristoleinsäure im Mittel weniger als 6 oder mehr als 27 mg/100 ml,
Palmitoleinsäure im Mittel weniger als 70 oder mehr als 160 mg/100 ml,
Ölsäure im Mittel weniger als 199 oder mehr als 329 mg/100 ml,
Linolsäure im Mittel weniger als 73 oder mehr als 213 mg/100 ml,
Linolensäure im Mittel weniger als 77 oder mehr als 287 mg/100 ml,
gamma-Linolensäure im Mittel mehr als 1 mg/100 ml,
Arachidonsäure im Mittel mehr als 8 mg/100 ml,
Gesamt-Carnitin im Mittel mehr als 1 mg/100 ml,
Lezithin im Mittel weniger als 5 oder mehr als 29 mg/100 ml,
Vitamin B₁ (Thiamin) im Mittel weniger als 22 oder mehr als 36 µg/100 ml,
Vitamin B₂ (Riboflavin) im Mittel weniger als 21 oder mehr als 45 µg/100 ml,
Vitamin B₃ (Niacin) im Mittel weniger als 45 oder mehr als 125 µg/100 ml,
Vitamin B₆ im Mittel weniger als 15 oder mehr als 30 µg/100 ml,
Vitamin B₁₂ im Mittel weniger als 250 oder mehr als 290 ng/100 ml,
Vitamin C im Mittel weniger als 3 oder mehr als 11 mg/100 ml,
Folsäure im Mittel weniger als 2 oder mehr als 8 µg/100 ml,
Pantothensäure im Mittel weniger als 170 oder mehr als 290 µg/100 ml,
Biotin im Mittel weniger als 1,2 oder mehr als 1,6 µg/100 ml,
Cholin im Mittel weniger als 1 oder mehr als 10 mg/100 ml,
Vitamin-D-Sulfat im Mittel weniger als 0,32 oder mehr als 0,72 µg/100 ml,
Inosit im Mittel weniger als 10 oder mehr als 30 mg/100 ml,
Vitamin A im Mittel weniger als 25 oder mehr als 75 µg/100 ml,
Carotinoide im Mittel weniger als 21 oder mehr als 39 µg/100 ml,
Vitamin D im Mittel weniger als 0,2 oder mehr als 1,0 µg/100 ml,
Vitamin E im Mittel weniger als 0,05 oder mehr als 0,09 mg/100 ml,
Vitamin K im Mittel weniger als 0,7 oder mehr als 1,3 µg/100 ml,
Eisen im Mittel weniger als 40 oder mehr als 100 µg/100 ml,
Kupfer im Mittel weniger als 25 oder mehr als 45 µg/100 ml,
Zink im Mittel weniger als 130 oder mehr als 230 mg/100 ml,
Chrom im Mittel weniger als 0,1 oder mehr als 0,9 µg/100 ml,
Kobalt im Mittel weniger als 8 oder mehr als 12 µg/100 ml,
Mangan im Mittel weniger als 2,4 oder mehr als 4,4 µg/100 ml,
Molybdän im Mittel weniger als 0,2 oder mehr als 0,8 µg/100 ml,
Selen im Mittel weniger als 0,2 oder mehr als 0,8 µg/100 ml,
Jodid im Mittel weniger als 1 oder mehr als 3 µg/100 ml,
Brom im Mittel weniger als 10 oder mehr als 170 µg/100 ml,
Fluor im Mittel weniger als 5 oder mehr als 15 µg/100 ml,
Cytidinmonophosphat im Mittel weniger als 950 oder mehr als 1050 µg/100 ml,
Inosinmonophosphat im Mittel weniger als 5 oder mehr als 15 µg/100 ml,
Cytidin im Mittel weniger als 100 oder mehr als 140 µg/100 ml,
Inosin im Mittel weniger als 11 oder mehr als 13 µg/100 ml und/oder
Acetylcholin im Mittel weniger als 90 oder mehr als 110 µg/100 ml enthält.

Frühgeborenen- Säuglings- und Diätnahrung, dadurch gekennzeichnet, dass eine oder mehrere der natürlicherweise in Equidenmilch vorkommenden Substanzen Gehalte außerhalb ihrer natürlichen Mittelwerte in Equidenmilch aufweisen.

Frühgeborenen-, Säuglings- und Diätnahrungen, dadurch gekennzeichnet, dass die Gehalte anteilig um den Betrag zugesetzten oder entfernten Wassers vermindert oder erhöht sind.

Verfahren zur Herstellung von Frühgeborenen-, Säuglings- und Diätnahrungen, dadurch gekennzeichnet, dass man
a) Milch, Milchbestandteile und Milchprodukte von Säugetieren mit zur Ernährung und/oder therapeutischen Behandlung des Menschen geeigneten Substanzen kombiniert,
b) die Anpassung teilweise oder vollständig durch die Kombination von Milch, Milchbestandteilen und Milchprodukten unterschiedlicher Säugetierarten, Säugetierrassen und Säugetierunterrassen durchführt,
c) die Milch von Säugetieren durch Maßnahmen der Tierzucht an die physiologischen Erfordernisse von Diätnahrungen anpasst,
d) die Milch von Säugetieren durch Maßnahmen der Tierhaltung an die physiologischen Erfordernisse von Diätnahrungen anpasst,
e) die Milch von Säugetieren durch Maßnahmen der Milchgewinnung an die physiologischen Erfordernisse von Diätnahrungen anpasst,
f) die Milch von Säugetieren durch Maßnahmen der Milchverarbeitung an die physiologischen Erfordernisse von Diätnahrungen anpasst und/oder
g) an sich bekannte Verfahren zu Anpassung von Substanzkombinationen teilweise oder vollständig ersetzt durch Prozesse, die den in der Homöopathie nach Hahnemann und der anthroposophisch erweiterten Medizin nach Rudolf Steiner zur Heilmittelzubereitung oder zur Heilung selbst verwendeten Prozessen ähnlich oder vergleichbar sind.

Verfahren, dadurch gekennzeichnet, dass man die Veränderungen der Zusammensetzung der Ausgangssubstanzen teilweise oder vollständig unter weitgehendem oder vollständigem Erhalt des natürlichen Nährstoffzusammenhangs der Ausgangssubstanzen vornimmt.

Verfahren, dadurch gekennzeichnet, dass man keine Verfahren zur Keimreduktion anwendet, die negativen Einfluss auf die Inhaltsstoffe des Produktes haben.

Verfahren, dadurch gekennzeichnet, dass man während des Adaptions-Verfahrens Temperaturen unterhalb von 63°C, insbesondere 42°C einstellt.

Verfahren, dadurch gekennzeichnet, dass die Anpassung durch die Herstellung von Zusätzen zu Milch, Milchbestandteilen oder Milchprodukten von Säugetieren erfolgt.

Verfahren, dadurch gekennzeichnet, dass man Milch, Milchbestandteile und Milchprodukte von Equiden anpasst, insbesondere durch quantitative Veränderung der natürlich vorkommenden Inhaltsstoffe außerhalb der Mittelwerte des natürlichen Vorkommens.

Verfahren, dadurch gekennzeichnet, dass man eine oder mehrere der Substanzen und/oder Substanzengruppen einsetzt, die ausgewählt sind aus Wasser, Mineralien, Kohlenhydraten, Lipiden, Lipoiden, Phospholipoiden, Cerebrosiden, Fettsäuren, Proteinen, Polypeptiden, Peptiden, Peptonen, Aminosäuren, nicht proteinogenem Nitrogen (NPN), Vitaminen, Spurenelementen, Citrat, Malat, Neuraminsäuren, Nucleinsäuren, Nucleotiden, Nucleosiden, Nucleobasen, Hormonen und/oder hormonal wirksamen Substanzen, insbesondere Acetylcholin.

Verfahren, dadurch gekennzeichnet, dass man die Adaption durch die Verfütterung von Hühnereipräparationen an Equidae vornimmt.

## Patentansprüche

1. Diätnahrungen, ausgenommen Säuglings- und Frühgeborenennahrung, aus Milch, Milchbestandteilen und Milchprodukten von Säugetieren, dadurch gekennzeichnet, dass wenigstens ein Teil des in den Nahrungen enthaltenen beta-Lactoglobulins in Form von Monomeren vorliegt, das Verhältnis von alpha-Lactalbumin zu beta-Lactoglobulin im Molkenproteinanteil der Nahrangen im Mittel größer als 0,8 ist und im Casein-Anteil der Nahrungen das Verhältnis von beta-Casein zu alpha-s-Casein im Mittel größer als 1,0 ist, ausgenommen Kumyß und Diätnahrungen, die aus unveränderter, nur fettangereicherter und/oder kohlenhydratangereicherter Säugetiermilch bestehen.

2. Diätnahrungen nach Anspruch 1, dadurch gekennzeichnet,
dass das Endprodukt
Kalium im Mittel weniger als 48 mg oder mehr als 68 mg/100 ml,
Magnesium im Mittel weniger als 4,6 oder mehr als 10,6 mg/100 ml,
Natrium im Mittel weniger als 9 oder mehr als 19 mg/100 ml,
Chlorid im Mittel weniger als 26 oder mehr als 38 mg/1 00 ml,
Lactose im Mittel weniger als 5,3 oder mehr als 6,9 g/100 ml,
Maltodextrine im Mittel mehr als 10 mg/100 ml,
Oligosaccharide im Mittel weniger als 50 oder mehr als 150 mg/100 ml,
N-Acetylneuraminsäure im Mittel weniger als 5,1 oder mehr als 6,1 mg/100 ml,
Leucin im Mittel weniger als 160 oder mehr als 200 mg/100 ml,
Methionin im Mittel weniger als 23 oder mehr als 63 mg/1 00 ml,
Threonin im Mittel weniger als 60 oder mehr als 95 mg/100 ml,
Tryptophan im Mittel weniger als 10 oder mehr als 30 mg/100 ml,
Valin im Mittel weniger als 80 oder mehr als 140 mg/100 ml,
Asparaginsäure im Mittel weniger als 168 oder mehr als 188 mg/100 ml,
Cystin im Mittel weniger als 18 oder mehr als 28 mg/100 ml,
Glycin im Mittel weniger als 30 oder mehr als 40 mg/1 00 ml,
Prolin im Mittel weniger als 150 oder mehr als 160 mg/100 ml,
Lysin im Mittel weniger als 131 oder mehr als 191 mg/100 ml,
Taurin im Mittel weniger als 0,9 oder mehr als 2,9 mg/100 ml,
Caprinsäure im Mittel weniger als 31 oder mehr als 81 mg/100 ml,
Laurinsäure im Mittel weniger als 34 oder mehr als 114 mg/100 ml,
Myristinsäure im Mittel weniger als 58 oder mehr als 98 mg/100 ml,
Palmitinsäure im Mittel weniger als 208 oder mehr als 308 mg/100 ml,
Stearinsäure im Mittel weniger als 8 oder mehr als 22 mg/100 ml,
Myristoleinsäure im Mittel weniger als 6 oder mehr als 27 mg/100 ml,
Palmitoleinsäure im Mittel weniger als 70 oder mehr als 160 mg/100 ml,
Ölsäure im Mittel weniger als 199 oder mehr als 329 mg/100 ml,
Linolsäure im Mittel weniger als 73 oder mehr als 213 mg/100 ml,
Linolensäure im Mittel weniger als 77 oder mehr als 287 mg/100 ml,
gamma-Linolensäure im Mittel mehr als 1 mg/100 ml,
Arachidonsäure im Mittel mehr als 8 mg/100 ml,
Gesamt-Carnitin im Mittel mehr als 1 mg/100 ml,
Lezithin im Mittel weniger als 5 oder mehr als 29 mg/100 ml,
Vitamin B₁ (Thiamin) im Mittel weniger als 22 oder mehr als 36 µg/100 ml,
Vitamin B₂ (Riboflavin) im Mittel weniger als 21 oder mehr als 45 µg/100 ml,
Vitamin B₃ (Niacin) im Mittel weniger als 45 oder mehr als 125 µg/100 ml,
Vitamin B₆ im Mittel weniger als 15 oder mehr als 30 µg/100 ml,
Vitamin B₁₂ im Mittel weniger als 250 oder mehr als 290 ng/100 ml,
Vitamin C im Mittel weniger als 3 oder mehr als 11 mg/100 ml,
Folsäure im Mittel weniger als 2 oder mehr als 8 µg/100 ml,
Pantothensäure im Mittel weniger als 170 oder mehr als 290 µg/100 ml,
Biotin im Mittel weniger als 1,2 oder mehr als 1,6 µg/100 ml,
Cholin im Mittel weniger als 1 oder mehr als 10 mg/100 ml,
Vitamin-D-Sulfat im Mittel weniger als 0,32 oder mehr als 0,72 µg/100 ml,
Inosit im Mittel weniger als 10 oder mehr als 30 mg/100 ml,
Vitamin A im Mittel weniger als 25 oder mehr als 75 µg/100 ml,
Carotinoide im Mittel weniger als 21 oder mehr als 39 µg/100 ml,
Vitamin D im Mittel weniger als 0,2 oder mehr als 1,0 µg/100 ml,
Vitamin E im Mittel weniger als 0,05 oder mehr als 0,09 mg/100 ml,
Vitamin K im Mittel weniger als 0,7 oder mehr als 1,3 µg/100 ml,
Eisen im Mittel weniger als 40 oder mehr als 100 µg/100 ml,
Kupfer im Mittel weniger als 25 oder mehr als 45 µg/100 ml,
Zink im Mittel weniger als 130 oder mehr als 230 mg/100 ml,
Chrom im Mittel weniger als 0,1 oder mehr als 0,9 µg/100 ml,
Kobalt im Mittel weniger als 8 oder mehr als 12 µg/100 ml,
Mangan im Mittel weniger als 2,4 oder mehr als 4,4 µg/100 ml,
Molybdän im Mittel weniger als 0,2 oder mehr als 0,8 µg/100 ml,
Selen im Mittel weniger als 0,2 oder mehr als 0,8 µg/100 ml,
Jodid im Mittel weniger als 1 oder mehr als 3 µg/100 ml,
Brom im Mittel weniger als 10 oder mehr als 170 µg/100 ml,
Fluor im Mittel weniger als 5 oder mehr als 15 µg/100 ml,
Cytidinmonophosphat im Mittel weniger als 950 oder mehr als 1050 µg/100 ml,
Inosinmonophosphat im Mittel weniger als 5 oder mehr als 15 µg/100 ml,
Cytidin im Mittel weniger als 100 oder mehr als 140 µg/100 ml,
Inosin im Mittel weniger als 11 oder mehr als 13 µg/100 ml und/oder
Acetylcholin im Mittel weniger als 90 oder mehr als 110 µg/100 ml enthält.

3. Diätnahrung nach Anspruch 1 oder 2, dadurch gekennzeichnet, dass eine oder mehrere der natürlicherweise in Equidenmilch vorkommenden Substanzen Gehalte außerhalb ihrer natürlichen Mittelwerte in Equidenmilch aufweisen.

4. Diätnahrungen nach Anspruch 2 oder 3, dadurch gekennzeichnet, dass die Gehalte anteilig um den Betrag zugesetzten oder entfernten Wassers vermindert oder erhöht sind.

5. Verfahren zur Herstellung von Diätnahrungen nach Anspruch 1 bis 4, dadurch gekennzeichnet, dass man
a) Milch, Milchbestandteile und Milchprodukte von Säugetieren mit zur Ernährung und/oder therapeutischen Behandlung des Menschen geeigneten Substanzen kombiniert,
b) die Anpassung teilweise oder vollständig durch die Kombination von Milch, Milchbestandteilen und Milchprodukten unterschiedlicher Säugetierarten, Säugetierrassen und Säugetierunterrassen durchführt,
c) die Milch von Säugetieren durch Maßnahmen der Tierzucht an die physiologischen Erfordernisse von Diätnahrungen anpasst,
d) die Milch von Säugetieren durch Maßnahmen der Tierhaltung an die physiologischen Erfordernisse von Diätnahrungen anpasst,
e) die Milch von Säugetieren durch Maßnahmen der Milchgewinnung an die physiologischen Erfordernisse von Diätnahrungen anpasst,
f) die Milch von Säugetieren durch Maßnahmen der Milchverarbeitung an die physiologischen Erfordernisse von Diätnahrungen anpasst und/oder
g) an sich bekannte Verfahren zu Anpassung von Substanzkombinationen teilweise oder vollständig ersetzt durch Prozesse, die den in der Homöopathie nach Hahnemann und der anthroposophisch erweiterten Medizin nach Rudolf Steiner zur Heilmittelzubereitung oder zur Heilung selbst verwendeten Prozessen ähnlich oder vergleichbar sind.

6. Verfahren nach Anspruch 5, dadurch gekennzeichnet, dass man die Veränderungen der Zusammensetzung der Ausgangssubstanzen teilweise oder vollständig unter weitgehendem oder vollständigem Erhalt des natürlichen Nährstoffzusammenhangs der Ausgangssubstanzen vornimmt.

7. Verfahren nach Anspruch 5 oder 6, dadurch gekennzeichnet, dass man keine Verfahren zur Keimreduktion anwendet, die negativen Einfluss auf die Inhaltsstoffe des Produktes haben.

8. Verfahren nach einem der Ansprüche 5 bis 7, dadurch gekennzeichnet, dass man während des Adaptions-Verfahrens Temperaturen unterhalb von 63°C, insbesondere 42°C einstellt.

9. Verfahren nach einem der Ansprüche 5 bis 8, dadurch gekennzeichnet, dass die Anpassung durch die Herstellung von Zusätzen zu Milch, Milchbestandteilen oder Milchprodukten von Säugetieren erfolgt.

10. Verfahren nach einem der Ansprüche 5 bis 9, dadurch gekennzeichnet, dass man Milch, Milchbestandteile und Milchprodukte von Equiden anpasst, insbesondere durch quantitative Veränderung der natürlich vorkommenden Inhaltsstoffe außerhalb der Mittelwerte des natürlichen Vorkommens.

11. Verfahren nach einem der Ansprüche 5 bis 10, dadurch gekennzeichnet, dass man eine oder mehrere der Substanzen und/oder Substanzengruppen einsetzt, die ausgewählt sind aus Wasser, Mineralien, Kohlenhydraten, Lipiden, Lipoiden, Phospholipoiden, Cerebrosiden, Fettsäuren, Proteinen, Polypeptiden, Peptiden, Peptonen, Aminosäuren, nicht proteinogenem Nitrogen (NPN), Vitaminen, Spurenelementen, Citrat, Malat, Neuraminsäuren, Nucleinsäuren, Nucleotiden, Nucleosiden, Nucleobasen, Hormonen und/oder hormonal wirksamen Substanzen, insbesondere Acetylcholin.

12. Verfahren nach einem der Ansprüche 5 bis 11, dadurch gekennzeichnet, dass man die Adaption durch die Verfütterung von Hühnereipräparationen an Equidae vornimmt.
